# EUROPEAN PATENT APPLICATION

(11) **EP 3 869 401 A1**
(43) Date of publication of application: **25.08.2021**
(21) Application number: 20158708.6
(22) Date of filing: 21.02.2020
(51) Int. Cl.: G06K 9/62, G06T 7/00, G06K 9/34, G06K 9/46

(54) **OUT-OF-DISTRIBUTION DETECTION OF INPUT INSTANCES TO A MODEL**

(71) Applicant: Koninklijke Philips N.V., 5656 AG Eindhoven (NL)
(72) Inventor: PEZZOTTI, Nicola, 5656 AE Eindhoven (NL); MAVROEIDIS, Dimitrios, 5656 AE Eindhoven (NL)
(74) Representative: Philips Intellectual Property & Standards

(57) **Abstract**

The invention relates to a system (200) for out-of-distribution (OOD) detection of input instances to a main model. The main model generates output images from input instances. The OOD detection uses multiple secondary models, trained on the same training dataset as the main model. To perform OOD detection for an input instance, per-pixel OOD scores are determined for output images of the secondary models for the input instance. A pixel OOD score of a pixel is determined as a variability among respective values of the pixel in the respective secondary model output images. This variability is generally lower for ID instances than for OOD instances and thus provides a measure of whether the input instance is OOD or not. The determined pixel OOD scores are combined into an overall OOD score indicating whether the input instance is OOD with respect to the training dataset.

## Description

### FIELD OF THE INVENTION

The invention relates to a system for out-of-distribution detection of input instances to a model, and to a corresponding computer-implemented method. The invention further relates to a system for enabling out-of-distribution detection, and to a corresponding computer-implemented method. The invention also relates to a computer-readable medium.

### BACKGROUND OF THE INVENTION

The processing pipeline of data coming from medical imaging devices, such as MR and CT scanners, involves various complex image processing operations. For example, raw data coming from a scanner may be converted into an image to be inspected by a clinician, a task known as image reconstruction. As another example, particular objects may be recognized and highlighted in an image produced by the medical imaging device, a task known as semantic segmentation. Image analysis can also be used, for example, to locate pathologies. Generally, such image processing models generate an output image from an input instance, e.g., an input image, or raw scanner data represented in a so-called k-space representation (for MR scanners) or in a sinogram (for CT scanners).

Given the complexity of the various image processing operations involved, it is becoming more and more appealing to use machine learnable models for medical image processing. Such machine learnable models can be trained automatically on a training dataset to perform various tasks, and hold the promise of providing better results than manually designed algorithms. For example, in "Adaptive-CS-Net: FastMRI with Adaptive Intelligence" by N. Pezzotti et al. (available at https://arxiv.org/abs/1912.12259 and incorporated herein by reference), a machine learnable model is proposed for reconstructing MR images from undersampled k-space data, which is shown to perform better than traditional methods. Another application is denoising of low-dose CT scans. Also in various other application domains, for example, autonomous driving and visual surveillance, image processing models that provide output images, such as segmentation models, are constantly improving in quality and are increasingly being deployed in real life.

When applying such machine learnable image processing models in real life, especially in critical application domains such as medical image analysis and autonomous driving, it is important that the output images provided by the image processing model can be relied upon. However, when machine learnable image processing models are applied to input instances that are too dissimilar from the data used during training, they are typically not guaranteed to provide accurate results. Input instances that are too dissimilar are typically referred to as being "out-of-distribution" (OOD). Moreover, it may not be directly observable from the output images of the model that something is wrong. For example, in medical imaging, it has been observed that some image processing models based on deep learning can produce realistic, anatomically plausible images that are different from the true anatomy. Because the artefacts look like true anatomy, a radiologist may not be able to identify them as such. This could lead to a misinterpretation impacting diagnosis, reduced confidence in product value/quality, and/or additional burden for the radiologist.

Unfortunately, various known OOD detection techniques are not applicable to image processing models that have an image as output (as opposed to, say, a classification). Accordingly, it would be desirable to be able to perform OOD detection of input instances to image processing models.

### SUMMARY OF THE INVENTION

Various embodiments relate to estimating whether an input instance to be processed by a model producing an output image, e.g., a deep neural network, was included in the dataset used for training, and accordingly, whether the model may be expected to produce reliable results.

In accordance with a first aspect of the invention, a system for out-of-distribution (OOD) detection of input instances to a main model is proposed. In accordance with a further aspect of the invention, a computer-implemented method of OOD detection of input instances to a main model is proposed. The main model may be configured to generate an output image from an input instance. The main model may be a machine-learnable model that has been, or is being, trained on a training dataset. To perform the OOD detection, multiple secondary models may be used. A secondary model may be trained on the same training dataset on which the main model is trained. Given an input instance, the secondary models may be applied to it to obtain respective secondary model output images. Per pixel, a pixel OOD score may be determined as a variability among respective values of the pixel in the respective secondary model output images. The pixel OOD scores may be combined into an overall OOD score indicating whether the input instance is OOD with respect to the training dataset. Based on the overall OOD score, an output signal may be generated indicating whether the input instance is OOD.

To provide OOD detection, various aspects use multiple secondary models, trained on the same training dataset as the main model. The multiple secondary models may together be referred to as an "ensemble" of secondary models. A training dataset typically comprises multiple training input instances and corresponding training output images. The main model may be trained to, given a training input instance, produce the corresponding training output image. The secondary models may be trained on the same training dataset, in the sense that they may be trained to produce the same training output images given the same training input instances, or at least to produce outputs from inputs where these outputs and inputs are related to the original training outputs and inputs, e.g., by downscaling, channel reduction, or another image processing operation. The secondary models may use the same model architecture as the main model (optionally, the main model can be one of the secondary models), or a variant of it, e.g., a simplification that has fewer trainable parameters. For example, respective secondary models may be trained by training the same trainable model based on respective random initializations of its set of parameters.

By being trained on similar data and/or by using a similar architecture as the main model, the secondary models may be expected to exhibit largely the same behaviour as the main model and as each other, when they are applied to input instances that are similar to the training data. Accordingly, at least when an input instance is input to the secondary models that is similar to the training data, or in other words, is in distribution (ID), the secondary models may generally produce similar results. Thus, the per-pixel variance of the output images of the secondary models may generally be low. However, when an input instance is out-of-distribution (OOD), the secondary models have not been trained to provide similar outputs for that input instance, and since they are separately trained, may generally have a higher per-pixel variance of their output images. Accordingly, each separate pixel OOD score of a pixel of the output image may be considered to be a measurement of whether the input instance is OOD or not, and accordingly, an overall assessment of the input instance being OOD may be obtained by combining pixel OOD scores of one or more pixels into an overall OOD score.

Accordingly, OOD detection may be performed for image generating models in an efficient and accurate way. A relatively limited number of secondary models may suffice to obtain an accurate overall OOD score, for example, at most twenty or even at most ten or at most five. The inventors have been able to get good results already with five secondary models. Effectively, because each pixel OOD score may by itself be regarded as a measurement of the input instance being OOD or not, also with a limited number of secondary models, sufficient data may be available to determine OOD-ness of the input instance. Moreover, by using secondary models with fewer trainable parameters and/or smaller inputs and/or smaller outputs, the overhead of computing the OOD score with respect to applying the main model may be limited. Another advantage of the provided OOD detection techniques is that they are largely model-agnostic, e.g., not relying on a particular model architecture of the main model and/or secondary models.

In accordance with another aspect of the invention, a system for enabling out-of-distribution (OOD) detection of inputs to a main model is proposed. In accordance with a further aspect of the invention, a corresponding computer-implemented method is proposed. In the system and method, multiple secondary models may be trained on the same training dataset on which the main model has been trained. The secondary models may then be associated with the main model to enable the OOD detection. In accordance with a further aspect of the invention, a computer-readable medium is proposed comprising transitory or non-transitory data representing one or more of instructions for performing a computer-implemented method as described herein, or secondary models associated with main model to enable OOD detection as described herein.

In various embodiments, the OOD detection techniques described herein may be applied for medical image processing. Various models for medical image processing are known in the art per se and may be combined with the presented techniques. In medical image processing, the output image of the main model may be determined from input data of a medical imaging device, for example, a CT scanner or an MR scanner. Interestingly, when using data from an MR scanner, being able to do OOD detection as described herein may enable to safely use undersampled k-space data (e.g., obtained by accelerated scanning) since the output image may be flagged as OOD if the input instance is not sufficiently similar to known training examples to apply the main model. Since less data has to be acquired in the scanner, examination time can be reduced while still getting reliable results. Similarly, when using data from a CT scanner, the use of OOD detection techniques may enable to safely apply a lower dose with reliable results, resulting in lower radiation for patients.

Generally, when using input data from a medical imaging device, this input data can be a signal produced by the medical imaging device. For example, for MR scanners, the signal may be represented in k-space or in image space by applying the inverse Fourier transform to the k-space representation. Similarly, for CT scanners, the signal may be represented as a sinogram or in image space by applying the inverse Radon transform to the sinogram representation. In such cases where a raw signal is used, the main model can for example be a medical image reconstruction model configured to reconstruct the input image from the signal. Such a reconstruction model may also be referred to, or comprise, a denoising model. For example, a CT image may be reconstructed from a CT signal or a MR image may be reconstructed from a MR signal, although the model can also be trained, for example, to reconstruct a CT image from a MR signal or a MR image from a CT signal. Instead of using a signal as input, a medical image processor model can also operate on an input image reconstructed from such a signal.

The main model can be a segmentation model, e.g., a semantic segmentation model, for use in medical image processing or in other application domains. A segmentation model may be configured to indicate a part of an input instance representing a particular characteristic, e.g., an object or other type of aspect that can be located in an image. For example, a characteristic can be any particular type of object that can be present at a particular location in the input instance (e.g., a cyst, a tumour, a cell nucleus, a lymphocyte, a necrotic tissue, etc.), or a particular characteristic that an object present in the input instance may have (e.g., dark, noisy, spiky, etc.). For example, the main model may provide, per image pixel, an indication of whether the pixel belongs to the characteristic. The main model may also be configured to indicate, for respective pixels of the input instance, respective amounts, or extents, of presence of the characteristic (e.g., a cell or nuclei density, a perfusion in tissue, etc.) at that pixel location.

The main model can also be a medical image analysis model configured to determine an output image that locates a pathology in an input image; such a model may operate on a reconstructed image or on the signal of the medical imaging device, as desired. For example, the main model may be a tumour detection model, e.g., for prostate or ovarian tumour, or a tumour grading model configured to assign abnormality values to parts of a tumour identified in the input image.

As the skilled person understands, the techniques provided herein are not limited to medical image processing and can also be used in various other application domains for image processing such as autonomous driving or video surveillance.

In various aspects, an output signal may be generated based on the overall OOD score, indicating whether the input instance is OOD. Such an output signal can be used in various ways, e.g., by a user or in further automated processing.

Optionally, the overall OOD score maybe used to decide whether to apply the main model to the input instance. In such cases, only if the OOD score does not indicate that the input instance is OOD, the main model may be applied to the input instance to obtain a main model output image, and the main model output image may be output, e.g., to a user in a sensory perceptible manner, or digitally for further automated processing. However, it is also possible to apply the main model to the input instance also for input instances that are indicated to be OOD, e.g., in such cases, the output image may be shown along with a warning or error that the input instance is determined to be OOD.

Optionally, the output signal may further indicate one or more pixels of the output images contributing to the input instance being OOD, for example, a subset of pixels with the highest pixel OOD scores. For example, the indicated pixels can be pixels whose OOD scores exceed a threshold, or they can be a fixed percentage or number of pixels with the highest OOD scores. By indicating contributing pixels, helpful feedback may be provided for understanding why the input instance was determined OOD, and accordingly, how this may be remedied, e.g., by including additional training data in the training dataset similar to the input instance in those respects indicated to be contributing.

Generally, there can be various causes for an input instance being OOD, and accordingly, various remedies may be applied upon an OOD detection. Several causes and remedies are now discussed that can be used separately or in combination.

A possible cause for an input instance being OOD can be an input instance that is of too low quality. For example, if an input instance is very similar to training examples, the input instance may represent a "routine case" for which the main model can still confidently provide a model output. In such a case, generally, the secondary models may also consistently provide similar output images. If the input instance is less similar to the training dataset, however, the secondary models may diverge, and thus there is less confidence in the main model output. Accordingly, the input instance may be determined to be OOD. For example, the input instance may be data from a CT scanner operating at a too low dose to reliably produce an output image for a particular subject being scanned, or an MR scanner operating at a too high acceleration. Accordingly, in some embodiments, upon determining that an input instance is OOD, a new measurement of the input instance (e.g., a new CT or MR scan) at a higher quality (e.g., higher dose or lower acceleration) may be obtained for which again an overall OOD score may be determined. If the new input instance is not OOD, this input instance may be used further, e.g., presented to a user or processed automatically. Optionally, this process may be repeated for multiple quality settings.

Another possible cause for an input instance being OOD may be a measurement artefact in the input instance. For example, there may be a movement artefact due to a movement of the subject being scanned in a medical imaging device, or a metal artefact, or the like. Accordingly, instead of or in addition to performing a new measurement at a higher quality, also a new measurement at the same quality may be performed. If the new input instance is not OOD, it may be used further, the previous input instance being disregarded as an artefact.

Another possible cause for an input instance being OOD is that the subject being measured by the input instance is out-of-distribution. For example, the subject being scanned may have a pathology that is underrepresented in the dataset. This cause may be recognized by determining that multiple input instances representing the same subjects are OOD, but input instances of other subjects are not OOD. When it is determined that the subject is OOD, for example, the subject may be reported to a user, e.g., a clinician, for further analysis. Optionally, upon detecting that the subject is OOD, another output image for the input instance may be determined using a fallback model and the other output image may be used instead of the output image of the main model. The fallback model can for instance be a non-trainable model. For example, for MR scans, a SENSE-based reconstruction as known per se may be used as a fallback if the subject is OOD.

Another possible cause for input instance being OOD can be a persistent measurement problem, e.g., a defect in the measurement device or wrong environment conditions for the measurement. This cause may be recognized by determining that input instances representing multiple subjects are OOD. In such a case, the persistent measurement problem may be reported for fixing.

It will be appreciated by those skilled in the art that two or more of the above-mentioned embodiments, implementations, and/or optional aspects of the invention may be combined in any way deemed useful.

Modifications and variations of any computer-implemented method and/or any computer readable medium, which correspond to the described modifications and variations of a corresponding system, and vice versa, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which:
Fig. 1 shows a system for enabling out-of-distribution (OOD) detection of inputs to a main model;
Fig. 2 shows a system for out-of-distribution (OOD) detection of input instances to a main model;
Fig. 3 shows a detailed example of a model for use with the techniques described herein, in this case, a U-Net type model;
Fig. 4 shows a detailed example of how to determine an overall OOD score for an input instance;
Fig. 5 shows a computer-implemented method of out-of-distribution (OOD) detection of input instances to a main model;
Fig. 6 shows a computer-implemented method of enabling out-of-distribution (OOD) detection of inputs to a main model;
Fig. 7 shows a computer-readable medium comprising data.

It should be noted that the figures are purely diagrammatic and not drawn to scale. In the figures, elements which correspond to elements already described may have the same reference numerals.

### DETAILED DESCRIPTION OF EMBODIMENTS

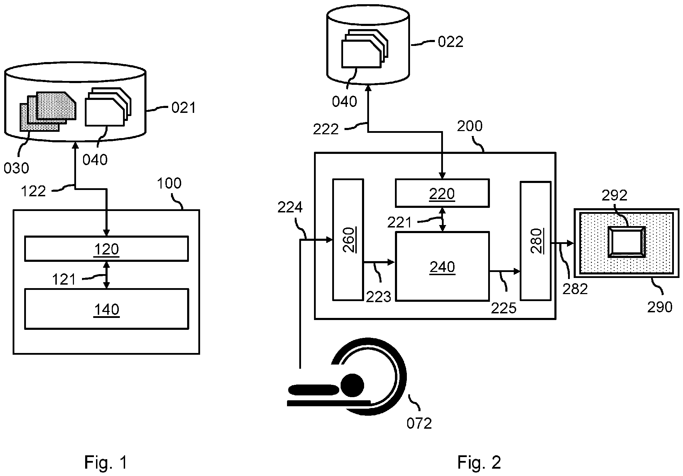

**Fig. 1** shows a system 100 for enabling out-of-distribution (OOD) detection of inputs to a main model. The main model may be configured to generate an output image from an input instance. The main model may have been trained on a training dataset. The system 100 may comprise a data interface 120 and a processor subsystem 140 which may internally communicate via data communication 121. Data interface 120 may be for accessing data 030 representing the training dataset on which the main model is trained. Data interface 120 can also be for accessing the main model and/or multiple secondary models 040, as discussed in more detail below. The secondary models 040 may be used for OOD detection according to a method described herein, e.g., by system 200 of Fig. 2. The enabling of OOD detection and the OOD detection itself may be combined in a single system or method, e.g., systems 100 and 200 may be combined into a single system. The system, e.g., its processor subsystem, may be further configured to train the main model on training dataset 030.

The processor subsystem 140 may be configured to, during operation of the system 100 and using the data interface 120, access data 030, 040. For example, as shown in Fig. 1, the data interface 120 may provide access 122 to an external data storage 021 which may comprise said data 030, 040. Alternatively, the data 030, 040 may be accessed from an internal data storage which is part of the system 100. Alternatively, the data 030, 041 may be received via a network from another entity. In general, the data interface 120 may take various forms, such as a network interface to a local or wide area network, e.g., the Internet, a storage interface to an internal or external data storage, etc. The data storage 021 may take any known and suitable form.

Processor subsystem 140 may be configured to, during operation of the system 100 and using the data interface 120, train multiple secondary models 040. A secondary model 040 may be trained on the training dataset 030 on which the main model is trained. A secondary model 040 may be for determining a secondary model output image for an input instance for use in the OOD detection.

Processor subsystem 140 may be further configured to associate the multiple secondary models 040 with the main model to enable the OOD detection. The secondary models may be associated with the main model, or more specifically with data representing the main model, in any suitable manner, e.g., by including the secondary models in the model data itself, e.g., as a file header, XML element, etc., or providing the secondary models as a separate file, or in any other manner. For example, the secondary models 040 may be stored in a same data container as the main model, for example in a same file(s), but may also be provided as separate secondary models associated with the main model. For example, in some embodiments, the main model may link to the secondary models, e.g., by containing an URL at which the secondary models 040 are accessible, or the secondary models 040 may link to the main model. Various other means of association are equally conceivable and within reach of the skilled person.

As an optional component, the system 100 may comprise an input interface (not shown) for obtaining sensor data from a sensor, for example, a signal produced by a medical imaging device such as a CT scanner or an MR scanner. One or more training input instances of the training dataset may be based on such sensor data. Obtaining of input instances via an input interface is discussed in more detail with respect to Fig. 2 and the options described there can be applied in system 100 as well. The sensor itself which is configured to measure the sensor data, e.g., the CT scanner or the MR scanner, may be part of the system 100.

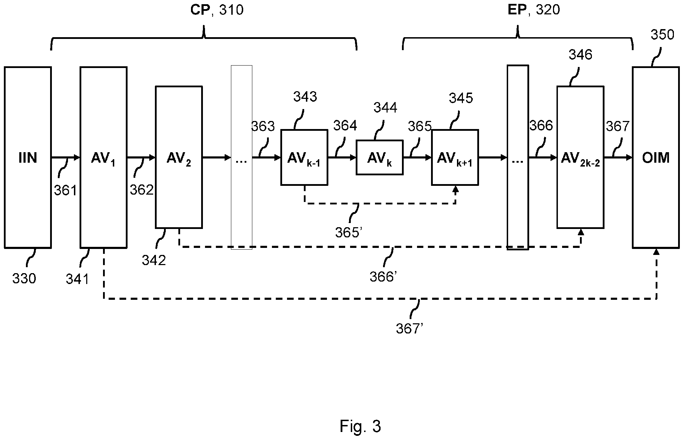

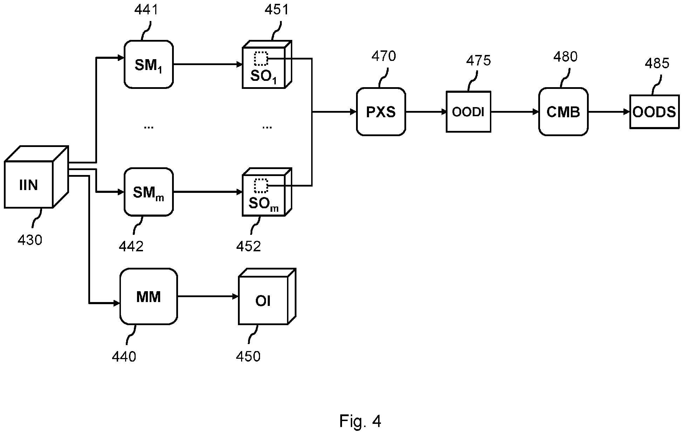

Various details and aspects of the operation of the system 100 will be further elucidated with reference to Figs. 3 and 4, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a system 200 for out-of-distribution (OOD) detection of input instances to a main model. The main model may be configured to generate an output image from an input instance. The main model may have been trained on a training dataset. The system 200 may comprise a data interface 220 and a processor subsystem 240 which may internally communicate via data communication 221. Data interface 220 may be for accessing data 040 representing multiple secondary models for use in the OOD detection. A secondary model may be trained on the same training dataset on which the main model is trained. Data interface 220 can also be for accessing the main model. The secondary model data may be obtained from a system for enabling OOD detection, e.g., system 100 of Fig., 1, or by performing a method for enabling OOD detection as described herein.

The processor subsystem 240 may be configured to, during operation of the system 200 and using the data interface 220, access data 040. For example, as shown in Fig. 2, the data interface 220 may provide access 222 to an external data storage 022 which may comprise said data 040. Alternatively, the data 040 may be accessed from an internal data storage which is part of the system 200. Alternatively, the data 040 may be received via a network from another entity. In general, the data interface 220 may take various forms, such as a network interface to a local or wide area network, e.g., the Internet, a storage interface to an internal or external data storage, etc. The data storage 022 may take any known and suitable form.

Processor subsystem 240 may be configured to, during operation of the system 200 and using the data interface 220, obtain an input instance. Processor subsystem 240 may be further configured to apply the respective multiple secondary models to obtain respective secondary model output images. Processor subsystem 240 may be further configured to determine pixel OOD scores of pixels of the respective secondary model output images. A pixel OOD score of a pixel may be determined as a variability among respective values of the pixel in the respective secondary model output images. Processor subsystem 240 may further combine the determined pixel OOD scores into an overall OOD score. The overall OOD score may indicate whether the input instance is OOD with respect to the training dataset.

Processor subsystem 240 may further generate an output signal 225 based on the overall OOD score, the output signal 225 being indicative of whether the input instance is OOD. For example, the output signal can be the overall OOD score itself, or an alert raised if input instance is OOD. The output signal may further indicate one or more pixels of the output images contributing to the input instance being OOD, thus providing an explanation of why the input instance is OOD, that can be output to a rendering device or to another software component for further automated processing.

Optionally, at least if the OOD score does not indicate that that input instance is OOD, processor subsystem 240 may apply the main model to the input instance to obtain a main model output image, and output the main model output image, for example, to a user via an output interface as discussed below, or to another software component for further automatic processing. For example, to establish whether the determined OOD score indicates OOD-ness or not, the OOD score may be compared against a threshold OOD score, e.g., a fixed score or a score associated with the secondary models. It is not necessary to apply the main model to the input instance even if the input instance is in distribution, for example, in some embodiments, OOD scores for multiple input instances of a dataset can be determined to compute a similarity between the dataset and the training dataset, without necessarily applying the main model to these input instances.

As an optional component, the system 200 may comprise an input interface 260 for obtaining sensor data 223 from a sensor, for example, from a signal 224 produced by a medical imaging device such as a CT scanner or an MR scanner. Shown in the figure is an MR scanner 072. For example, the signal can be a raw signal from the medical imaging device, e.g., represented in k-space (in the case of an MR scanner) or as a sinogram (in the case of a CT scanner), or transformed into image space, e.g. by an inverse Fourier Transform or an inverse Radon transform, respectively.

For example, the MR scanner may be configured to perform an accelerated scan, for example, with an acceleration factor of at least two, at least four, or at least six. In such cases, successful reconstruction or analysis of the MR data may still be possible using an appropriate trained model, but there is a higher risk of wrong results for inputs that are underrepresented in the training dataset, making OOD detection particularly important. Similar considerations apply in the case of CT scanners operating at a low dose, for example, at most half of the full dose or at most a quarter of the full dose.

However, various other types of sensors and corresponding signals 224 are possible, e.g., the sensor can be a camera producing images, a video camera producing a video, etc. Generally, input interface 260 may be configured for various types of sensor signals, e.g., video signals, radar/LiDAR signals, ultrasonic signals, etc. The input instance on which OOD detection is performed may be based on sensor data 223, for example, the input instance be equal to sensor data 223 or an optional pre-processing step may be performed on it. The sensor itself which is configured to measure the signal 224, e.g., the CT scanner or the MR scanner 072, may be part of the system 200.

As an optional component, the system 200 may comprise a display output interface 280 or any other type of output interface for outputting the output signal 225 to a rendering device, such as a display 290. For example, the display output interface 280 may generate display data 282 for the display 290 which causes the display 290 to render the output signal in a sensory perceptible manner, e.g., as an on-screen visualisation 292. For example, an error or warning message may be shown if the input instance is OOD, for example, alongside the model output of the main model. In case the input instance is OOD, particular pixels of the secondary model output images contributing to the input instance being OOD may also be rendered, e.g., highlighted on the output image of the main model.

Various details and aspects of the operation of the system 200 will be further elucidated with reference to Figs. 3 and 4, including optional aspects thereof.

In general, the system 200 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 200 may also be implemented in a distributed manner, e.g., involving different devices or apparatuses, such as distributed servers, e.g., in the form of cloud computing.

**Fig. 3** shows a detailed, yet non-limiting, example of a model for use with the techniques described herein. For example, a main model and/or one or more of the secondary models for use in the techniques described herein, may be built according to the model architecture described in this figure. The particular example shown in this figure is a fully convolutional neural network, more specifically, a U-Net-type model. Such a model may be used, e.g., for various image-to-image translations, including reconstruction of images from a medical imaging device.

The model shown here determines an output image **OIM,** 350, for an input instance **IIN,** 330. In this example, input instance **IIN** is an image, e.g., represented as a M × *N* × *c*-sized matrix, where the number of channels c can be c = 1 in case of a greyscale image, c = 3 in case of an RGB image, etcetera. The number of channels does not need to correspond to different colours however and in that sense the input instance **IIN** may also be more generally referred to as an input volume. The output image **OIM** in this example is an image of the same spatial dimensions as the input instance **IIN,** e.g., with the same width and height. The output image **OIM** can have the same number of channels as the input image but the number of channels can also be different.

The model here is an example of a convolutional network, also called a convolutional neural network. Generally, the term convolutional network may be used to refer to any neural network that comprises at least one convolutional layer. As is known in the art, a convolutional layer is a layer which operates by performing a convolution, or sliding dot product, operation. Accordingly, in a convolutional layer, a *m* × *n* × *c*-sized input volume may be transformed into a *m'* × *n'* × *c*'-sized output volume using *c'* filters that each convolve over the input volume. For example, the number of filters at a layer can be at most or at least 8, at most or at least 32, or at most or at least 128. The spatial dimensions *m'* × *n'* of the output of a layer can be different from the spatial dimensions *m* × *n* of its input, although generally a spatial correspondence with the input **IIN** is maintained. For example, the spatial dimensions of the output of a layer can be smaller than its input, e.g., the convolutional layer may perform a downsampling. The spatial dimensions of the output of the layer can also be larger than the spatial dimensions of the input, e.g., the layer may be a so-called "up-convolution" layer implemented by upsampling of the input feature map and then applying a convolution operation. Convolutional neural networks can comprise various other types of layers in addition to convolutional layers, e.g., one or more ReLU layer and/or one or more pooling layers. The number of convolutional layers in a convolutional network can for example be at least 5, or at least 10.

More specifically, the model shown in this figure is a so-called fully convolutional network. Such a model transforms input instance **IIN** into an output image **OIM** in a sequence of layers that each preserve a spatial correspondence with the input instance, e.g., convolutional layers, pooling layers, ReLU layers, etc.

The model in this figure is an encoder-decoder model. Generally, such a model comprises a contracting part **CP,** 310 (also known as an "encoder path") and an expansive part **EP,** 320 (also known as a "decoder path"). The contracting part **CP** may comprise one or more layers that produce subsequent activation volumes for input instance **IIN.** Shown in the figure are activation volumes **AV1,** 341, **AV2,** 342, up to **AVk-1,** 343 and **AVk,** 344. An activation volume may be determined from a previous activation volume by one or more layers of the model, as illustrated by arrows 361, 362, up to 363 and 364: typically, a max-pooling followed by one or more convolutional layers with associated ReLU operations. As illustrated in the figure, the spatial dimensions of the activation volumes are typically decreased in size throughout the contracting part **CP,** e.g., activation volume **AV2** may have smaller spatial dimensions than activation volume **AV1** (although the number of channels may actually increase), and similarly for the other activation volumes shown.

The activation volume **AVk** resulting from the contracting part **CP** of the U-net model may then be processed in the expansive part **EP.** Also the expansive part may comprise one or more layers that produce subsequent activation volumes, e.g., activation volumes **AVk+1,** 345, up to **AV2k-2,** 346 and finally output image **OIM.** As above, an activation volume may be determined from a previous activation volume by one or more layers of the model, as illustrated by arrows 365 up to 366 and 367. In this case, in a typical example, an up-convolution (e.g., an upsampling followed by a convolution) may be used, followed by one or more convolutional layers with associated ReLU operations. As illustrated in the figure, in the expansive part **EP** the spatial dimensions of the activation volumes are typically increased in size, e.g., activation volume **AVk+1** may have larger spatial dimensions than activation volume **AVk** (although the number of channels may decrease), and similarly for the other activation volumes shown.

Interestingly, the expansive part **EP** can optionally comprise so-called skip connections, in which an activation volume **AVi** of the contracting part **CP** may be concatenated with an activation volume of the expansive part **EP.** An encoder-decoder model with one or more skip connections may be referred to as a U-Net type model. For example, the result of an up-convolution may be concatenated with a corresponding activation volume of the contracting part **CP** after which one or more convolutions may be applied. The feature map of the contracting part may be cropped to account for border pixels. For example, as illustrated in the figure by arrow 365', activation volume **AVk-1** may be concatenated with the upconvolution of activation volume **AVk,** from the result of which activation volume **AVk+1** may then be determined. Similarly, the determination of activation volume **AV2k-2** may use a skip connection 366' to a respective activation volume **AV2;** the determination of activation volume **OIM** may use a skip connection 367' to respective activation volume **AV1,** etc.

An example of a U-net model is presented in O. Ronneberger et al., "U-Net: Convolutional Networks for Biomedical Image Segmentation" (available at https://arxiv.org/abs/1505.04597 and incorporated herein by reference). Another known example is the so-called ResNet, or Residual Network. A detailed example of a model for MR data reconstruction which uses a U-net type architecture in an iterative procedure and can be applied herein, is presented in "Adaptive-CS-Net: FastMRI with Adaptive Intelligence" by N. Pezzotti *et al.*

**Fig. 4** shows a detailed, yet non-limiting, example of how to determine an overall out-of-distribution (OOD) score for an input instance to a main model, and thereby perform OOD detection of the input instance.

As illustrated in the figure, OOD detection may be performed in the form of the determination of an overall OOD score **OODS,** 485. In an embodiment, an input **IIN** may be given to several secondary models **SMi,** 441-442. The outputs **SOi,** 451-452, may then be used to create a so called OOD image **OODI,** 475. The value of a pixel of the OOD image **OODI** may represent a variability of the corresponding pixels in the output images **SOi** of the models **SMi.** An OOD value **OODS** may then be obtained by reducing the OOD image **OODI,** e.g., by averaging the OOD image, taking the maximum, or the minimum. Once obtained, the OOD score **OODS** may be used to assess if the input **IIN** to the model **MM** is in or outside the training distribution. Such an assessment may be a good indicator of the resulting quality of the models in the ensemble and/or the main model **MM.** The input may also be processed by the main model **MM,** 440, which may produce the main output image **OI,** 450 (e.g., a reconstructed MR image, a denoised CT image, etc.), denoised image in CT). As discussed in more detail below, in some embodiments, the main model **MM** can be bigger than the secondary models **SMi,** e.g., in terms of number of parameters, thus allowing for a higher quality main output **OI,** while keeping the compute time of the OOD score computation **OODS** under control.

Specifically, shown in the figure is an input instance **IIN,** 430 on which OOD detection is to be performed. As also discussed with respect to Fig. 3, the input instance **IIN** can be an input image, e.g., comprising one, three, or another number of channels. The image may be captured by a camera, but it is also possible to use other type of sensor data, e.g., audio data or time-series data of multiple sensor measurements, represented as an image. It is also not necessary for input instance **IIN** to be an image. For example, input instance **IIN** may be a feature vector from which the main model generates an output image, e.g., a latent representation of a generator part of a Generative Adversarial Network (GAN) or a decoder part of an autoencoder, e.g., a Variational Autoencoder (VAE). In the latter part, input instance **IIN** can represent synthetic data from which a synthetic output image is to be generated, but input instance **IIN** can also represent a real-world input, e.g., by being determined as or based on the output of the encoder part of the autoencoder.

As another example, the input instance **IIN** can represent a signal produced by a medical imaging device, e.g., for use in a medical image reconstruction or medical image analysis task. For example, in the case of a MR scanner, the input instance may represent the scanner signal in so-called k-space, or in the image space resulting from applying an inverse Fourier transform to the k-space data. Similarly, in the case of a CT scanner, the input instance may represent the scanner signal as a sinogram, or in image space by applying the inverse Radon transform.

In any case, in various embodiments, the input instance **IIN** can comprise extra information in addition to the sensor/image data, e.g., metadata such as log data or patient-specific information that can help determine a more accurate output.

Also shown in the figure is a main model **MM,** 440. The main model may be an image processing model. Generally, the term "image processing model" is used here to refer to a model that has an image, e.g., a volume with a width, a depth, and a number of channels (which can be one, three, or any other number), as output (but does not need to have an image as input). The output image of the main model **MM** is shown in the figure as **OI,** 450. The output image **OIM** can have a single channel, as may be the case for various segmentation models, MR or CT reconstruction models, etcetera; three channels, as may be the case for various generative models, image-to-image translation models, etcetera; or any other number of channels as appropriate for the application at hand. The output image can be discrete, e.g., binary, e.g., in case of a mask; or continuous, e.g., in case of a generative model. In case the input instance is an image, the output image in many cases has the same spatial dimensions as the input, possibly up to border effects.

The main model **MM** has been trained on a training dataset (not shown): typically, a labelled dataset comprising multiple training input instances and corresponding desired training output images (for example, at least 1000 or at least 1000000 training instances). Accordingly, the main model is a trainable model (also known as a machine-learnable model or machine learning model). Such a trainable model is typically trained by learning values for a set of trainable parameters. For example, the number of parameters of the main model may be at least 1000, at least 100000 or at least 10 million. It is beneficial from the point of view of efficiency of training to use a model which is amenable to gradient-based optimization, e.g., which is continuous and/or differentiable in its set of parameters.

Various types of model may be used as the main model **MM.** For example, the main model may be a U-net type model, or more generally, any type of encoder-decoder model, fully convolutional neural network, convolutional neural network, or other type of neural network, as discussed with respect to Fig. 3. Such neural networks can also be used as part of a larger model, for example, in one or more iterations of an iterative model as done, for example, in "Adaptive-CS-Net: FastMRI with Adaptive Intelligence" by N. Pezzotti *et al.* As discussed above, the main model can be a generative model, e.g., the generative part of a GAN or the decoder part of a VAE. Generally, neural networks are also known as artificial neural networks. When using a neural network, the set of parameters may comprise weights of nodes of the neural network. For example, the number of layers of the model may be at least 5 or at least 10, and the number of nodes and/or weights may be at least 1000 or at least 10000. Depending on the particular application, various known architectures for neural networks and other types of machine learnable models may be used.

In order to perform OOD detection of input instance **IIN** to main model **MM,** multiple secondary models **SMi** may be used. Shown in the figure are secondary models **SM1,** 441, up to **SMm,** 442. For example, at most or at least five or at most or at least ten secondary models may be used. By applying respective secondary models **SMi,** respective secondary model output images **SMi** may be obtained, as illustrated in the figure by secondary model output images **SO1,** 451, up to **SOm,** 452.

Generally, secondary models **SMi** may be models that are trained on the same training dataset as the main model **MM.** Accordingly, the secondary models **SMi** may be expected to exhibit similar behaviour as the main model, and as each other, when applied to input instances **IIN** that come from the training dataset or are similar to instances from the training dataset. Accordingly, a relatively low per-pixel variability among outputs of the secondary models may be expected. However, on input instances **IIN** that do not come from the training dataset, there are no such guarantees, and accordingly, a higher per-pixel variability may be expected.

It will be noted that, to achieve the above behaviour, it is neither needed for the secondary models **SMi** to use the exact same model architecture as the main model **MM** or as each other; nor for the secondary models to be trained on the exact same training inputs and outputs. This observation can be exploited to improve efficiency by using secondary models **SMi** that are more efficient to train and/or to use. For example, one, several, or all of the secondary models may be trained on downscaled training input instances. In use, such a secondary model may be applied to an input instance **IIN** by first downscaling the input instance. One, several, or all of the secondary models may, instead or in addition, be trained on downscaled training output images, and accordingly, in use, produce smaller output images that can later be upscaled if necessary. For example, the inputs and/or outputs may be downscaled by at least a factor two, or at least a factor four.

Generally, the use of smaller inputs and/or outputs may enable to use smaller secondary models, e.g., having fewer trainable parameters than the main model, leading to reduced storage and computational requirements. It is also possible to simplify the secondary models to reduce the number of trainable parameters in other ways, e.g., by using a neural network with fewer layers, by using an iterative model with fewer iterations, etcetera. For example, a secondary model may have at most one half, at most 25%, or at most 10% of the number of trainable parameters as the main model. For example, if the main model is an iterative model, a secondary model may also be an iterative model with at most half, at most 25%, or at most 10% of the number of iterations, instead of or in addition to reducing the number of parameters used in a single iteration. For example, the inventors have obtained good results for a main model with 15 iterations, by using secondary models with 3 iterations.

In some embodiments, the secondary models **SMi** have a common model architecture, e.g., they may each be trained by initializing a set of parameters of the common model of and optimizing that set of parameters based on the initialization, but using different random initializations. This common architecture can be the same as or different from the architecture of the main model **MM.** This technique has the advantage of being generally applicable and being well amenable to parallelization, both in training and in using the secondary models.

It is noted that, although the main model **MM** is shown separately from the secondary models **SMi** in this figure, the main model can be used as one of the secondary models, e.g., both to determine a main model output and to determine a secondary model output. The main model **MM** can also be composed of several or all of the secondary models, e.g., the main model output may be determined based on outputs of one or more of the secondary models **SMi,** e.g., by averaging or another type of combination operation.

In an operation **PXS,** 470, the secondary model output images **SOi** may be used to determine pixel OOD scores of pixels of the respective secondary model output images **SOi.** For example, a pixel OOD score of the top-left pixel with coordinate (1,1) of the respective images **SOi** may be determined, and similarly for other pixels (*i,j*). In some embodiments, a pixel OOD score may be determined for each pixel. However, it is not needed to determine pixel OOD scores for all pixels and instead a sample of pixels can be taken instead, e.g., for efficiency reasons. The pixel OOD scores for several or all of the pixels may themselves be regarded to form an image that may be referred to as "OOD image" for the input instance **IIN.** Shown in the figure is OOD image **OODI,** 475.

Optionally, operation **PXS** may comprise resizing (for example, downscaling the images to the smallest size) and/or channel reducing secondary model output images **SOi** to make their sizes correspond (for example, converting the images to greyscale).

A pixel OOD score of a pixel may be determined as a variability among respective values of the pixel in the respective secondary model output images. For example, the variability may be determined as a variability measure of a vector comprising pixel values for the secondary output images **SOi,** e.g., greyscale pixel values between 0 and 1, discretized pixel values, etcetera. Any appropriate variability measure can be taken, e.g., a variance or standard deviation; a Shannon entropy; etcetera. In the case of multi-channel secondary output images, the output image can be converted into a single-channel image, e.g., converting to greyscale. It is also possible to determine a per-channel pixel OOD score, in which case the pixel OOD score may be obtained by combining the per-channel scores (e.g., as a maximum, minimum, or average), or by considering the vector of per-channel scores to be the pixel OOD score.

Having determined pixel OOD scores **OODI** of pixels of the secondary model output images **SOi,** these scores may be combined, in a combining operation **CMB,** 480, into an overall OOD score **OODS,** 485. The overall OOD score **OODS** may indicate whether the input instance is OOD with respect to the training dataset.

Various ways of depending the overall OOD score **OODS** are possible. For example, a maximum, minimum, or average may be used, or any other computation that generally provides a higher score for higher pixel OOD scores **OODI,** e.g., a function that is non-decreasing or increasing in each of the pixel OOD scores. Different score types provide different indications of OOD-ness that may be useful in different situations. The maximum may be used as a high-assurance option to ensure that there is no part of the output image for which the secondary models diverge, and accordingly, to ensure that each part of the output image of the main model is trustworthy. The average and minimum may be used to obtain a more global measure of trustworthiness of the main model output. Since the different measures provide different kinds of information about OOD-ness of the input instance **IIN,** also multiple OOD score values may be output, e.g., the overall OOD score may comprise respective constituent OOD score values, e.g., a maximum and an average.

In order to determine, based on the overall OOD score **OODS,** whether or not an input instance is OOD, a threshold OOD score may be applied. In some embodiments, as part of training the secondary models, the threshold score may be determined automatically based on OOD scores determined for multiple input instances to the main model. For example, the threshold score may be determined as a threshold of a statistical test of an overall OOD score belonging to the statistical distribution of OOD scores of in-distribution input instances. The threshold score can be computed, e.g., as an optimal threshold score for a training set (containing in-distribution samples) and a hold-out set (containing out-of-distribution samples).

Various known approaches may be used to train the secondary models as known per se in the art. Optionally, the main model is trained by the same system as the secondary models, although it is also possible to obtain a pre-trained main model and train secondary models to enable OOD detection on it. Typically, training is performed using stochastic approaches such as stochastic gradient descent, e.g., using the Adam optimizer as disclosed in Kingma and Ba, "Adam: A Method for Stochastic Optimization" (available at https://arxiv.org/abs/1412.6980 and incorporated herein by reference). As is known, such optimization methods may be heuristic and/or arrive at a local optimum. Training may be performed on an instance-by-instance basis or in batches, e.g., of at most or at least 64 or at most or at least 256 instances.

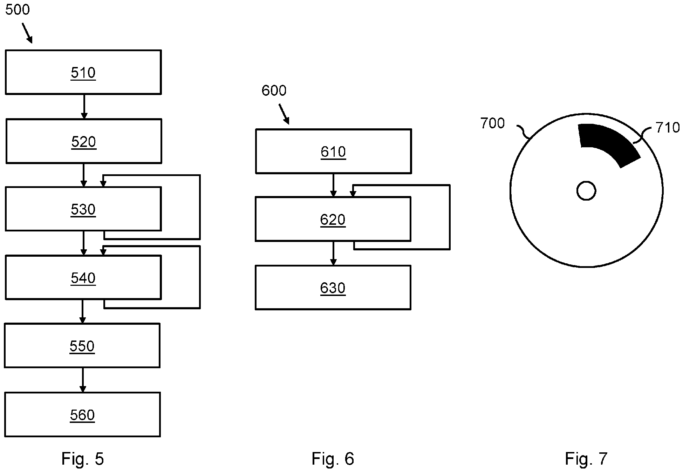

**Fig. 5** shows a block-diagram of computer-implemented method 500 of out-of-distribution (OOD) detection of input instances to a main model. The main model may be configured to generate an output image from an input instance. The main model may be trained on a training dataset. The method 500 may correspond to an operation of the system 200 of Fig. 2. However, this is not a limitation, in that the method 500 may also be performed using another system, apparatus or device.

The method 500 may comprise, in an operation titled "ACCESSING SECONDARY MODELS", accessing 510 data representing multiple secondary models for use in the OOD detection. A secondary model may be trained on the same training dataset on which the main model is trained.

The method 500 may comprise, in an operation titled "OBTAINING INPUT INSTANCE", obtaining 520 an input instance.

The method 500 may comprise, in an operation titled "APPLYING SECONDARY MODELS", applying 530 the respective multiple secondary models to obtain respective secondary model output images.

The method 500 may comprise, in an operation titled "DETERMINING OOD SCORES OF PIXELS", determining 540 pixel OOD scores of pixels of the respective secondary model output images. A pixel OOD score of a pixel may be determined as a variability among respective values of the pixel in the respective secondary model output images.

The method 500 may comprise, in an operation titled "COMBINING INTO OVERALL OOD SCORE", combining 550 the determined pixel OOD scores into an overall OOD score. The overall OOD score may indicate whether the input instance is OOD with respect to the training dataset.

The method 500 may comprise, in an operation titled "GENERATING OUTPUT SIGNAL", generating 560 an output signal based on the overall OOD score, the output signal being indicative of whether the input instance is OOD.

**Fig. 6** shows a block-diagram of computer-implemented method 600 of enabling out-of-distribution (OOD) detection of inputs to a main model. The main model may be configured to generate an output image from an input instance. The main model may be trained on a training dataset. The method 600 may correspond to an operation of the system 100 of Fig. 1. However, this is not a limitation, in that the method 600 may also be performed using another system, apparatus or device.

The method 600 may comprise, in an operation titled "ACCESSING TRAINING DATASET", accessing 610 data representing the training dataset on which the main model is trained.

The method 600 may comprise, in an operation titled "TRAINING SECONDARY MODELS", training 620 multiple secondary models. A secondary model may be trained on the training dataset on which the main model is trained. A secondary model may be for determining a secondary model output image for an input instance for use in the OOD detection, e.g., according to method 500.

The method 600 may comprise, in an operation titled "ASSOCIATING MODELS WITH MAIN MODEL", associating 630 the multiple secondary models with the main model to enable the OOD detection.

It will be appreciated that, in general, the operations of method 500 of Fig. 5 and method 600 of Fig. 6 may be performed in any suitable order, e.g., consecutively, simultaneously, or a combination thereof, subject to, where applicable, a particular order being necessitated, e.g., by input/output relations. Some or all of the methods may also be combined, e.g., method 600 of enabling OOD detection may be successively used to perform OOD detection using method 500.

The method(s) may be implemented on a computer as a computer implemented method, as dedicated hardware, or as a combination of both. As also illustrated in **Fig. 7****,** instructions for the computer, e.g., executable code, may be stored on a computer readable medium 700, e.g., in the form of a series 710 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 7 shows an optical disc 700. Alternatively, the computer readable medium 700 may comprise transitory or non-transitory data 710 representing multiple secondary models. The secondary models may be associated with a main model to enable OOD detection. The main model may be configured to generate an output image from an input instance. The main model may be trained on a training dataset. The secondary models may be trained on the training dataset on which the main model is trained. A secondary model may be for determining a secondary model output image for an input instance for use in the OOD detection. The secondary models may be obtained according to computer-implemented 600. The secondary models may be for use in computer-implemented method 500.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of' when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system (200) for out-of-distribution, OOD, detection of input instances to a main model, wherein the main model is trained on a training dataset, the main model being configured to generate an output image from an input instance, the system comprising:
- a data interface (220) for accessing data (040) representing multiple secondary models for use in the OOD detection, a secondary model being trained on the same training dataset on which the main model is trained;
- a processor subsystem (240) configured to:
- obtain an input instance;
- apply the respective multiple secondary models to obtain respective secondary model output images;
- determine pixel OOD scores of pixels of the respective secondary model output images, a pixel OOD score of a pixel being determined as a variability among respective values of the pixel in the respective secondary model output images;
- combine the determined pixel OOD scores into an overall OOD score, the overall OOD score indicating whether the input instance is OOD with respect to the training dataset;
- generate an output signal based on the overall OOD score, the output signal being indicative of whether the input instance is OOD.

2. The system (200) of claim 1, wherein the main model is configured to determine the output image from input data of a medical imaging device, for example a CT scanner or an MR scanner.

3. The system (200) of claim 2, wherein the main model is a medical image reconstruction model configured to reconstruct the output image from a signal produced by the medical imaging device.

4. The system (200) of claim 2, wherein the main model is a medical image analysis model configured to determine an output image locating a pathology in an input image.

5. The system (200) of any one of the preceding claims, wherein a secondary model is trained on downscaled training input instances and/or downscaled training output images of the training dataset.

6. The system (200) of any one of the preceding claims, wherein a secondary model comprises fewer trained parameters than the main model.

7. The system (200) of any one of the preceding claims, wherein the processor subsystem is further configured to, at least if the OOD score does not indicate that the input instance is OOD:
- apply the main model to the input instance to obtain a main model output image;
- output the main model output image.

8. The system (200) of any one of the preceding claims, wherein the output signal further indicates one or more pixels of the secondary model output images contributing to the input instance being OOD.

9. The system (200) of any preceding claim, further comprising an output interface (260) for outputting the output signal to a rendering device for rendering the output signal in a sensory perceptible manner to a user.

10. A system (100) for enabling out-of-distribution, OOD, detection of inputs to a main model, wherein the main model is trained on a training dataset, the main model being configured to generate an output image from an input instance, the system comprising:
- a data interface (120) for accessing data (030) representing the training dataset on which the main model is trained;
- a processor subsystem (140) configured to:
- train multiple secondary models, a secondary model being trained on the training dataset on which the main model is trained, a secondary model being for determining a secondary model output image for an input instance for use in the OOD detection;
- associate the multiple secondary models with the main model to enable the OOD detection.

11. The system (100) of claim 10, further configured to determine a threshold OOD score for the OOD detection and associate the threshold OOD score with the main model, the threshold OOD score being determined based on OOD scores of multiple input instances to the main model, an OOD score of an input instance being determined by:
- applying the respective multiple secondary models to obtain respective secondary model output images;
- determining pixel OOD scores of pixels of the respective secondary model output images, a pixel OOD score for a pixel being determined as a variability among respective values of the pixel in the respective secondary model output images;
- combining the determined pixel OOD scores into an overall OOD score, the overall OOD score indicating whether the input instance is OOD with respect to the training dataset.

12. The system (100) of claim 10 or 11, wherein a secondary model is trained by initializing a set of parameters of a trainable model and optimizing the set of parameters based on said initialization, respective secondary models being trained by training the same trainable model based on respective random initializations.

13. A computer-implemented method (500) of out-of-distribution, OOD, detection of input instances to a main model, wherein the main model is trained on a training dataset, the main model being configured to generate an output image from an input instance, the method comprising:
- accessing (510) data representing multiple secondary models for use in the OOD detection, wherein a secondary model is trained on the same training dataset on which the main model is trained;
- obtaining (520) an input instance;
- applying (530) the respective multiple secondary models to obtain respective secondary model output images;
- determining (540) pixel OOD scores of pixels of the respective secondary model output images, a pixel OOD score of a pixel being determined as a variability among respective values of the pixel in the respective secondary model output images;
- combining (550) the determined pixel OOD scores into an overall OOD score, the overall OOD score indicating whether the input instance is OOD with respect to the training dataset;
- generating (560) an output signal based on the overall OOD score, the output signal being indicative of whether the input instance is OOD.

14. A computer-implemented method (600) of enabling out-of-distribution, OOD, detection of inputs to a main model, wherein the main model trained on a training dataset, the main model being configured to generate an output image from an input instance, the method comprising:
- accessing (610) data representing the training dataset on which the main model is trained;
- training (620) multiple secondary models, a secondary model being trained on the training dataset on which the main model is trained, a secondary model being for determining a secondary model output image for an input instance for use in the OOD detection;
- associating (630) the multiple secondary models with the main model to enable the OOD detection.

15. A computer-readable medium (700) comprising transitory or non-transitory data (710) representing one or more of:
- instructions which, when executed by a processor system, cause the processor system to perform the computer-implemented method according to claim 13 and/or claim 14;
- multiple secondary models, the secondary models being associated with a main model to enable OOD detection, wherein the main model is trained on a training dataset, the main model being configured to generate an output image from an input instance, the secondary models being trained on the training dataset on which the main model is trained, a secondary model being for determining a secondary model output image for an input instance for use in the OOD detection.
